# EUROPÄISCHE PATENTSCHRIFT

(11) **EP 4 777 430 B1**
(45) Veröffentlichungstag und Bekanntmachung des Hinweises auf die Patenterteilung: **16.09.2026**
(21) Anmeldenummer: 24782821.3
(22) Anmeldetag: 26.09.2024
(51) Int. Cl.: B65G 13/10, B65G 47/54

(54) **MOTORROLLEN-UMLENKFÖRDERER IN KASSETTENBAUWEISE**
CASSETTE-CONSTRUCTION MOTORIZED-ROLLER DEFLECTING CONVEYOR
TRANSPORTEUR DE DÉVIATION À ROULEAUX MOTORISÉS DE CONSTRUCTION DE CASSETTE

(30) Priorität: 11.12.2023 DE 102023134598
(43) Veröffentlichungstag der Anmeldung: 22.07.2026
(73) Patentinhaber: SSI Schäfer Automation GmbH (AT), 8051 Graz (AT)
(72) Erfinder: SCHREINER, Martin, 8045 Graz (AT); TEUBL, Max Simon, 8010 Graz (AT)
(74) Vertreter: Witte, Weller & Partner Patentanwälte mbB
(86) Internationale Anmeldenummer: PCT/EP2024/077145
(87) Internationale Veröffentlichungsnummer: WO 2025/124773

(56) Entgegenhaltungen:
- EP-A1- 4 082 947
- EP-A1- 4 242 141
- US-A- 4 598 815
- US-B1- 11 014 748

## Beschreibung

Die vorliegende Offenbarung betrifft einen Umlenkförderer für eine intralogistische Anwendung, insbesondere für eine Fördertechnik-Weiche, wobei der Umlenkförderer ein Teil einer Umlenkvorrichtung sein kann, die wiederum ein Teil eines Fördersystems sein kann. Der Umlenkförderer ist eingerichtet, Fördergut in unterschiedliche Förderrichtungen umzulenken, insbesondere indem eine Umlenkförderer-Fläche um eine vertikale Achse gedreht bzw. verschwenkt wird.

Das Dokument US 11 014 748 B1 offenbart eine Umlenkvorrichtung für ein konventionelles Fördersystem. Die herkömmliche Umlenkvorrichtung umfasst eine Umlenkförderer, der aus mehreren parallel zueinander angeordneten (Rollen-) Förderermodulen besteht. Jedes der Förderermodule besteht aus einer Gruppe von linear angeordneten Rolleneinheiten. Die Rolleneinheiten einer Gruppe sind in einer Reihe angeordnet, die senkrecht zu einer Hauptförderrichtung orientiert sind. Die Förderermodule selbst sind in der Hauptförderrichtung beanstandet zueinander angeordnet. Ferner ist eine Steuerwelle vorgesehen, die für jede Gruppe aus Rolleneinheiten (d.h. für jedes Förderermodul) eine doppelte Nockenscheibe trägt, um die Rolleneinheiten eines jeweiligen Moduls in eine gewünschte Förderrichtung zu verschwenken bzw. zu verstellen, um Fördergüter in eine gewünschte Richtung umzulenken. Der Umlenkungsförderer baut in der Hauptförderrichtung sehr lang, insbesondere weil alle Module von einer einzigen gemeinsamen Steuerwelle angesteuert werden. Die Steuerwelle ist parallel zur Hauptförderrichtung orientiert und trägt somit zu einer (unerwünschten) Baulänge bei.

Das Dokument US 4 598 815 A offenbart ebenfalls eine Umlenkvorrichtung für ein Fördersystem, die aus einer (einzigen) Gruppe von Rolleneinheiten besteht, die einen Umlenkförderer bilden und die in einer Reihe quer zur Hauptförderrichtung angeordnet sind. Die Rolleneinheiten der Gruppe werden durch eine Schaltwalze um eine vertikale Achse in verschiedene Drehpositionen verschwenkt, die den gewünschten Förderrichtungen entsprechen. Die unterhalb der Reihe von Rolleneinheiten horizontal angeordnete Schaltwalze ist mit einer umfänglich geschlossenen (Führungs-) Nut versehen, in welche ein Nutenfolger radial von außen eingreift. Der Nutenfolger ist mit einem Verschwenkmechanismus (Parallelogramm) verbunden, um die Rolleneinheiten (quer zur Hauptförderrichtung) zu verschwenken bzw. zu verdrehen. Eine Achse der Schaltwalze ist parallel zur Gruppe bzw. Reihe der Rolleneinheiten ausgerichtet. Des Weiteren sind eine Antriebswelle und eine Umlenkwelle vorgesehen, die achsparallel zur Schaltwalze unterhalb der Rolleneinheiten angeordnet sind. Diese Wellen sind in der Hauptförderrichtung beabstandet zur Schaltwalze angeordnet und werden von Elementen angrenzender Förderer überlappt, so dass sie nur schwer zugänglich sind. Dies bedeutet mit anderen Worten, dass die Umlenkvorrichtung (in der Hauptförderrichtung) sehr breit baut und nur schwer zugänglich ist, so dass eine Wartung und einen Austausch der Umlenkvorrichtung erschwert wird.

Weiterer Stand der Technik findet sich in den Dokumenten: DE 26 30 973 A1, DE 11 73 302 A, DE 10 2007 054 089 A1, US 1 331 746 A und DE 10 74 350 A.

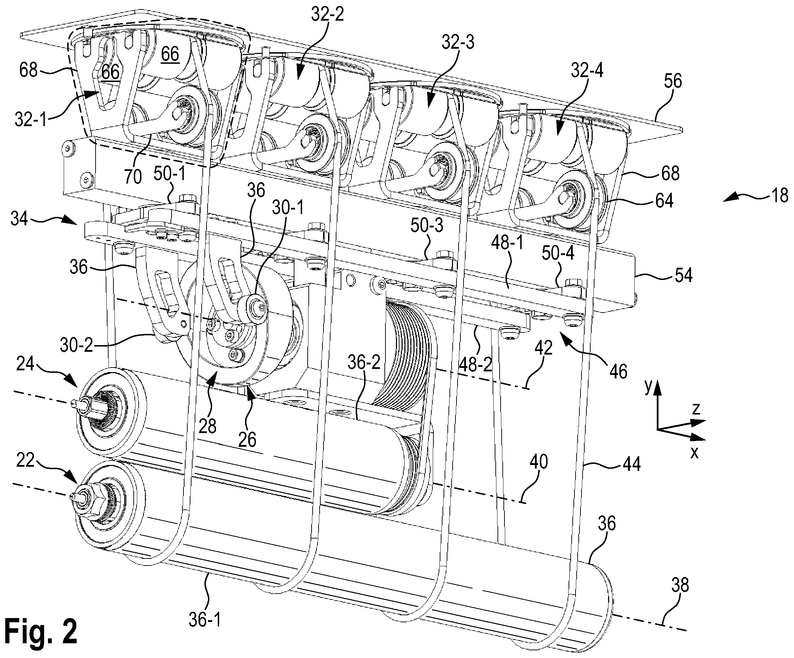

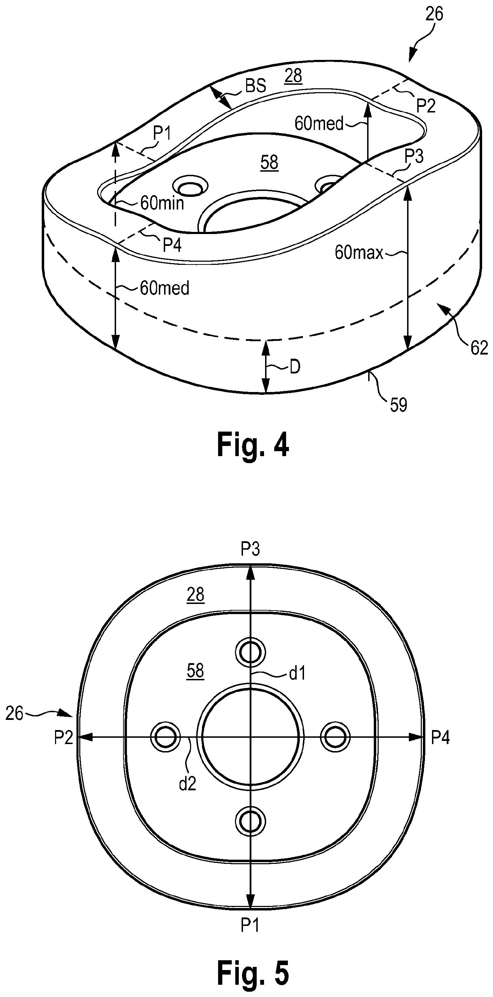

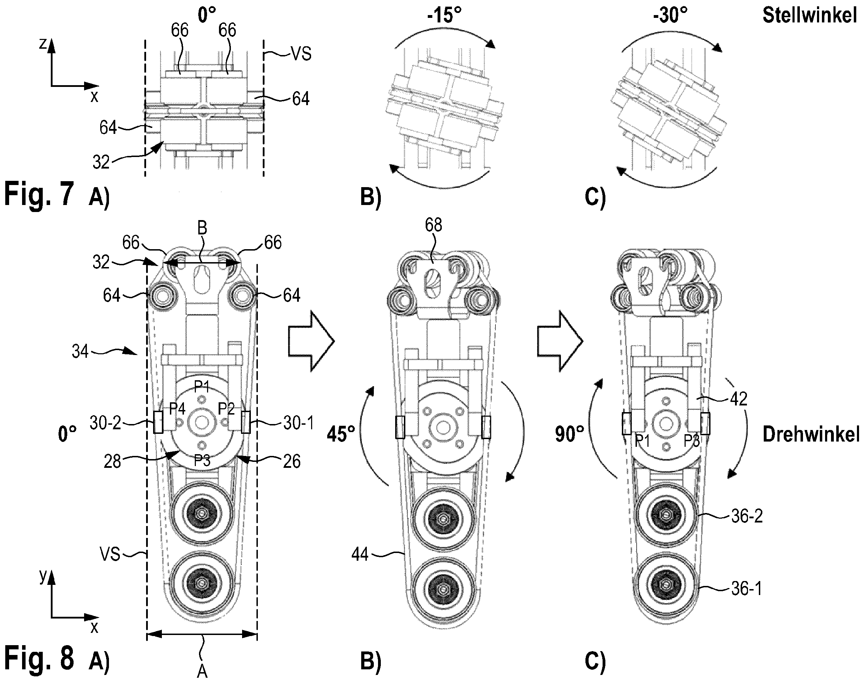

Das Dokument US 4 598 815 A beschreibt, gemäß seiner Zusammenfassung, eine Umlenkvorrichtung zum Umleiten von Gepäckstücken von einem Hauptförderband auf ein kreuzendes Förderband, die eine einzelne Reihe von darin schwenkbar gelagerten Umlenkrollen umfasst. Die Umlenkrollen werden kontinuierlich durch eine mechanisch vom Hauptförderband abgeleitete Kraft gedreht. Die Umlenkvorrichtung ist in einem im Hauptförderband ausgebildeten Spalt angebracht, und ein Hubmechanismus hebt und senkt die Umlenkrollen, während ein Schwenkmechanismus die Rollen gleichzeitig schwenkt, sodass die Gegenstände umgeleitet werden. Der Hubmechanismus und der Schwenkmechanismus sind synchronisiert, sodass die Rollen beim Absenken koaxial ausgerichtet sind, um nur sehr wenig horizontalen Platz einzunehmen und die Größe des Spalts zu verringern, über den die Gegenstände ohne Abstützung laufen. Wenn die Umlenkrollen angehoben werden, werden die Rollen jedoch automatisch geschwenkt, wobei teilweise der größere verfügbare Raum genutzt wird, und die Rollen leiten Gegenstände vom Hauptförderband um. Insbesondere wird in Spalte8, Z.23-48 sowie in Spalte 9, Zeile 67 bis Spalte 10, Zeile 23 offenbart:
*"Im zweiten Betriebsmodus, der in den* *Abb. 2* *und* *4* *dargestellt ist, wird der oberste Teil 32 jeder Rollenfläche 30 über die Oberseite 7 des Hauptförderbandes 8 angehoben, und die Achse 31 jeder Rolle 25 wird in Richtung des Sekundärförderers 16 geschwenkt. Die Schwenkung in Richtung des Nebenförderers 16 bedeutet eine Winkelstellung, bei der die Drehbewegung der Rollenfläche 30 den Gegenständen 6 einen Impuls verleiht, der die Gegenstände 6 im Wesentlichen in Richtung des Nebenförderers 16 treibt. Im zweiten Betriebsmodus greift ein Gegenstand 6, sobald er das Ende 35 der stromaufwärtigen Seite 12 des Hauptförderers 5 erreicht hat, in die Umlenkrollen 25 ein und wird dadurch angehoben und etwas gedreht. Es hat sich gezeigt, dass ein Gesamthub von etwa 0,5 Zoll bevorzugt ist. Die Drehbewegung der Rollenoberflächen 30 neigt dazu, die Artikel 6 in Richtung des Sekundärförderers 16 zu treiben. Wenn die Artikel 6 mit dem vorderen Ende 40 des Sekundärförderers 16 in Eingriff kommen, neigen sie dazu, auf den Sekundärförderer 16 gezogen zu werden, und die Umleitung ist abgeschlossen. Im Allgemeinen bewirkt eine Umleitung dieser Art, dass die Artikel 6 um einen Winkel von neunzig Grad gedreht werden und gleichzeitig ihre Laufrichtung ändern. Es hat sich gezeigt, dass die Umleitung am effizientesten ist, wenn der Sekundärförderer 16 die Artikel 6 um weitere 0,5 Zoll anhebt. "*
*"Die Welle 90 erstreckt sich zwischen den Lagern 95, die in den aufrechten Endrahmen 45 und 46 angeordnet sind. Die Welle 90 weist zwei Endabschnitte 96 und einen Mittelabschnitt 97 auf. Die Endabschnitte* 96 *haben einen kreisförmigen Querschnitt, während der Mittelabschnitt 97 exzentrisch zur Drehachse der kreisförmigen Endabschnitte 96 ausgerichtet ist. Die Welle 90 wird in den Lagern 95 durch die Endabschnitte 96 gelagert, und die Welle 90 dreht sich um eine Achse, die durch die Mittelpunkte der Endabschnitte 96 verläuft. Der Mittelabschnitt 97 hat ebenfalls einen kreisförmigen Querschnitt (**FIG. 7**), weist jedoch einen größeren Durchmesser auf als die Endabschnitte 96. Zudem verläuft eine Achse, die den Mittelpunkt des Mittelabschnitts 97 definiert, parallel zur, jedoch nicht kollinear mit der Drehachse der Exzenterwelle 90. Daher bewirkt die Drehung der Exzenterwelle 90 innerhalb der Lager 95, dass der Mittelabschnitt 97 innerhalb der Baugruppe 1 periodisch oszilliert. Eine geeignete maximale vertikale Gesamtbewegung eines Punktes auf der Oberfläche des Mittelabschnitts 97 während der Drehung für eine bestimmte Ausführungsform der Baugruppe 1 betrug etwa einen halben Zoll. Insbesondere war der Durchmesser des Mittelabschnitts 97 einen Viertelzoll größer als der Durchmesser der Endabschnitte 96. In der gezeigten Ausführungsform erstreckt sich der Mittelabschnitt 97 über eine Länge, die im Wesentlichen der Länge der Stange 52 entspricht oder geringfügig größer ist als diese. "*

Es ist daher eine Aufgabe der vorliegenden Offenbarung, einen Umlenkförderer für einen Förderer oder für ein Fördersystem vorzusehen, der kompakt baut und vorzugsweise einfach zu warten und auszutauschen ist. Der Umlenkförderer sollte insbesondere in der Hauptförderrichtung und in einer Höhenrichtung kurz bauen. Ferner wäre es wünschenswert, wenn der Umlenkförderer aus wenigen Bauteilen gebildet wird, die insbesondere kostengünstig sind.

Diese Aufgabe wird gelöst durch einen Umlenkförderer, der aufweist: eine Umlenkförderer-Fläche, die eingerichtet ist, ein darauf angeordnetes Fördergut an eine Vielzahl von, an jeweils unterschiedlichen Orten vorgesehenen, Abführförderern zu fördern, indem die Fläche angetrieben wird und indem die Fläche in entsprechend unterschiedliche Förderrichtungen (durch Verschwenken) ausgerichtet wird, wobei jede der Förderrichtungen durch einen der Orte festgelegt ist; eine erste angetriebene Welle zum Antreiben der Fläche; eine zweite angetriebenen Welle zum Ausrichten der Fläche, wobei die zweite Welle achsparallel, und insbesondere radial versetzt, zur ersten Welle angeordnet ist; eine (im Wesentlichen zylinderförmige) Scheibe, die achsparallel zur ersten und zur zweiten Welle angeordnet ist und die eine axial endseitig angeordnete Stirnseite aufweist, wobei die Stirnseite eine Spur mit einer axial gerichteten Spurhöhe umfasst, die sich entlang einer Umfangsrichtung der Scheibe in Übereinstimmung mit den unterschiedlichen Förderrichtungen ändert; und mindestens einen Wälzkörper, der die Spur axial berührt, der axial beweglich (und insbesondere radial unbeweglich) gelagert ist, sodass sich der mindestens eine Wälzkörper axial hin und her bewegt, während die Scheibe durch die zweite Welle gedreht wird, um die Fläche in die unterschiedlichen Förderrichtungen auszurichten.

Der Umlenkförderer besteht aus wenigen Bauteilen, die in der Längsrichtung, d.h. der Hauptförderrichtung, extrem kurz bauen, insbesondere weil sie untereinander angeordnet sind. Das axiale Kontaktieren des Wälzkörpers und der Scheibe ermöglichen es, dass die für die Umlenkung verantwortliche Schaltkulisse (Spur der Scheibe) direkt unterhalb der Umlenkförderer-Fläche, die vorzugsweise durch in einer Reihe angeordnete Rolleneinheiten gebildet wird, angeordnet werden kann, ohne seitlich über die Rolleneinheiten hinauszuragen. Der Umlenkförderer kann kassettenartig ausgebildet werden, was eine Installation, eine Wartung und einen Austausch erleichtert. Der Umlenkförderer kann einfach vertikal in eine Umlenkvorrichtung gesteckt und aus dieser wieder herausgezogen werden. Alle Komponenten des Umlenkförderers können in einem kastenartigen Gestell vormontiert und getestet werden, das in die Umlenkvorrichtung gesteckt wird.

Vorzugsweise weist die Spur einen im Wesentlichen kreisförmigen Querschnitt senkrecht zur Achse der Scheibe auf, wobei die Spur insbesondere entlang einer Umfangsrichtung der Scheibe geschlossen ausgebildet ist.

Der kreisförmige Querschnitt ermöglicht es, dass die Scheibe kontinuierlich in einer (einzigen) Drehrichtung gedreht werden kann, um den Umlenkförderer zwischen verschiedenen Förderrichtungen umzustellen. Der mit der Scheibe verbundene Stellantrieb kann ohne Richtungsumkehr betrieben werden, was die Lebensdauer des Stellantriebs verlängert.

Wartungsintervalle können länger gewählt werden, weil der Stellantrieb weniger stark belastet wird.

Eine Steuerung zum Umstellen zwischen den auswählbaren Förderrichtungen ist vereinfacht. Der Stellantrieb wird nur in einer einzigen Richtung betätigt.

Vorzugsweise hat die Spur einen ersten Durchmesser d1, der kleiner als ein zweiter Durchmesser d2 ist, sodass der mindestens eine Wälzkörper eine Oberfläche der Spur in jeder Drehstellung der Scheibe auf ganzer Wälzkörperbreite kontaktiert.

Aufgrund der Parallelogramm-artigen Natur des Schwenkmachanismuses bewegen sich die Wälzkörper bei einer Drehung der Scheibe nicht nur axial (in Bezug auf die Scheibe), sondern auch leicht radial. Dieses Radialspiel wird durch die sich leicht unterscheidenden Durchmesser ausgeglichen, so dass die Wälzkörper immer sicher auf ganzer Wälzkörperbreite mit der Spur in Kontakt sind. Dies stellt eine zuverlässige Kraftübertragung zwischen der Scheibe bzw. Spur und den Wälzkörpern sicher.

Insbesondere sind die ersten und zweiten Wellen vertikal übereinander angeordnet, wobei die zweite Welle vorzugsweise zwischen der ersten Welle und der Fläche angeordnet ist.

Der Umlenkförderer baut in der Hauptförderrichtung, und ggf. auch in der vertikalen Höhenrichtung, sehr kurz.

Vorzugsweise ist die Fläche durch eine Vielzahl von Rolleneinheiten definiert, die um eine vertikale Achse schwenkbar gelagert sind und die linear quer zu einer Zuführförderrichtung angeordnet sind.

Die Rolleneinheiten sind leicht, klein und sehr zuverlässig. Sie benötigen wenig Bauraum und eignen sich hervorragend zum Einsatz in Umlenkförderern.

Insbesondere sind die ersten und zweiten Wellen (ausschließlich) innerhalb des vertikalen Schattenraums angeordnet, dessen (horizontale) Breite durch eine Breite der Rolleneinheiten parallel zur Zuführförderrichtung in der Normalstellung des Umlenkförderers definiert ist.

Der Umlenkförderer baut in der Hauptförderrichtung kurz und kann einfach ein- und ausgebaut werden.

Vorzugsweise umfasst der mindestens eine Wälzkörper, insbesondere ausschließlich, einen ersten Wälzkörper und einen zweiten Wälzkörper, die die Spur, insbesondere um 180° versetzt, berühren.

Das Vorsehen von zwei Wälzkörpern bewirkt, dass immer einer der Wälzkörper von der Spur gedrückt wird, um die Fläche zu verstellen. Dies bedeutet mit anderen Worten, dass die Scheibe immer eine Druckkraft auf den Schwenkmechanismus ausübt. Es müssen keine Zugkräfte zum Zurückstellen der Fläche in ihre Normalstellung ausgeübt werden. Die Wälzkörper müssen nicht mit einer Federrückstellung oder Ähnlichem versehen werden. Es werden weniger Bauteile benötigt, um das zuverlässige Funktionieren sicherzustellen.

Insbesondere ist eine Höhenabwicklung der Spur spiegelsymmetrisch ausgebildet.

Die Scheibe kann kontinuierlich, d.h. ohne Richtungsumkehr, gedreht werden, um zwischen einer (ungeraden) Anzahl von Umlenkstellungen oszillierend zu wechseln.

Vorzugsweise sind die ersten und zweiten Wellen jeweils durch eine Motorrolle implementiert.

Motorrollen stellen eine kostengünstige Alternative zu sonst handelsüblichen Stellmotoren (inkl. Steuerung) dar. Der Preisunterschied kann bei einem Faktor von bis zu 5 liegen. Außerdem kommen Motorrollen gerade im Bereich von Fördersystemen zum Einsatz, die aus Rollenförderem aufgebaut sind. Somit kommen Motorrollen systematisch zum Einsatz und sind bereits vorhanden, insbesondere als Ersatzteile.

Des Weiteren kann eine Umlenkvorrichtung mit einem Umlenkförderer gemäß der oben beschriebenen Art vorgesehen werden. Ferner kann ein Fördersystem mit einem Zuführförderer, mindestens zwei Abführförderern und einer Umlenkvorrichtung gemäß der oben beschriebenen Art dazwischen vorgesehen werden, wobei jeder der Abführförderer an einem anderen Ort an die Umlenkvorrichtung angrenzt.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Offenbarung zu verlassen. Ausführungsbeispiele der Offenbarung sind in den Zeichnungen dargestellt und werden in der nachfolgenden Beschreibung näher erläutert. Es zeigen:
Fig. 1 eine Draufsicht auf ein Fördersystem mit einer Umlenkvorrichtung, die einen Umlenkförderer umfasst;
Fig. 2 eine schematische Unteransicht eines Umlenkförderers;
Fig. 3 eine Seitenansicht des Umlenkförderer der Fig. 2;
Fig. 4 eine perspektivische Ansicht einer Scheibe des Umlenkförderers der Fig. 2 und 3;
Fig. 5 eine schematische Draufsicht auf die Scheibe der Fig. 4;
Fig. 6 eine schematische Höhenabwicklung einer Spur der Scheibe der Fig. 2-5;
Fig. 7 eine Draufsicht auf eine schematische Rolleneinheit bei unterschiedlichen Stellwinkeln; und
Fig. 8 eine schematische Seitenansicht des Umlenkförderer der Fig. 2 und 3.

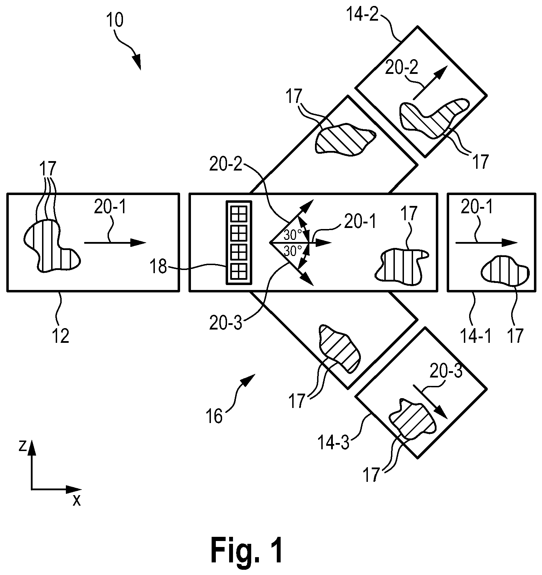

Fig. 1 zeigt eine schematische Darstellung eines Fördersystems 10, wie es insbesondere im Bereich der Intralogistik (z.B. in Lager- und Kommissioniersystemen, in Distributionszentren, in der Produktionslogistik und Ähnlichem) verwendet wird.

Das System 10 kann einen oder mehrere Zuführförderer 12 und einen oder mehrere Abführförderer 14 aufweisen. Das System 10 kann ferner eine oder mehrere Umlenkvorrichtungen 16 aufweisen. Die Umlenkvorrichtungen 16 können einen oder mehrere Umlenkförderer 18 umfassen.

Die Umlenkförderer 18 sind eingerichtet, eine Förderrichtung 20 zu verändern, um damit Fördergüter (nicht dargestellt) umzulenken. Die Umlenkvorrichtungen 16 können als Fördermodule ausgebildet sein, die in einem modular aufgebauten Fördersystem 10 eingesetzt werden. Jede der Umlenkvorrichtungen 16 ist eingerichtet, ein hier nicht näher gezeigtes und bezeichnetes Fördergut (z.B. Behälter, Paletten, Tablare, Kartons, Pakete, etc.) an einen ausgewählten der Abführförderer 14 zu fördern, indem die Förderrichtung 20 entsprechend verändert (oder beibehalten) wird, so dass das Fördergut an den gewünschten Abführförderer gelenkt wird, wobei die Vielzahl der Abführförderer 14 mindestens zwei Abführförderer 14 umfasst.

Die Umlenkvorrichtungen 16 stellen (Förderer-) Weichen dar. Bei den Förderern 12 und 14 handelt es sich vorzugsweise um Linearförderer. Es versteht sich, dass die Förderer 12 und 14 auch durch Kurvenförderer, Gefälleförderer, Heber und/oder Ähnliches implementiert sein könnten. Die Förderer 12 und 14 sowie die Umlenkvorrichtung 16 können z.B. als Rollenförderer mit (Förder-)Rollen 17 implementiert sein. Andere Förderertypen, wie z.B. Bandförderer (nicht gezeigt), sind auch möglich.

Das exemplarische System 10 der Fig. 1 weist exemplarisch einen Zuführförderer 12, drei Abführförderer 14-1 bis 14-3 und eine Umlenkvorrichtung 16 auf. Die Umlenkvorrichtung 16 der Fig. 1 ist zwischen dem Zuführförderer 12 und den Abführförderern 14-1 bis 14-3 angeordnet. Die Umlenkvorrichtung 16 ist generell eingerichtet, die Förderrichtung 20 zu ändern. In der Fig. 1 ist eine (lineare) Hauptförderrichtung mit 20-1 bezeichnet, die sich exemplarisch parallel zur Längsrichtung X des Systems 10 erstreckt und z.B. durch den Zuführförderer 12 und den Abführförderer 14-1 festgelegt ist. Die Hauptförderrichtung 20-1 entspricht der Zuführförderrichtung 20-1. Der Zuführförderer 12 und der Abführförderer 14-1 transportieren die (nicht gezeigten) Fördergüter also in der Hauptförderrichtung 20-1. Der Abführförderer 14-2 transportiert die Fördergüter entlang der Förderrichtung 20-2, die einen Winkel von z.B. +45° mit der Hauptförderrichtung 20-1 einschließen kann. Der Abführförderer 14-3 fördert entlang der Förderrichtung 20-3, die einen Winkel von z.B. -45° mit der Hauptförderrichtung 20-1 einschließen kann. Andere Winkel sind möglich.

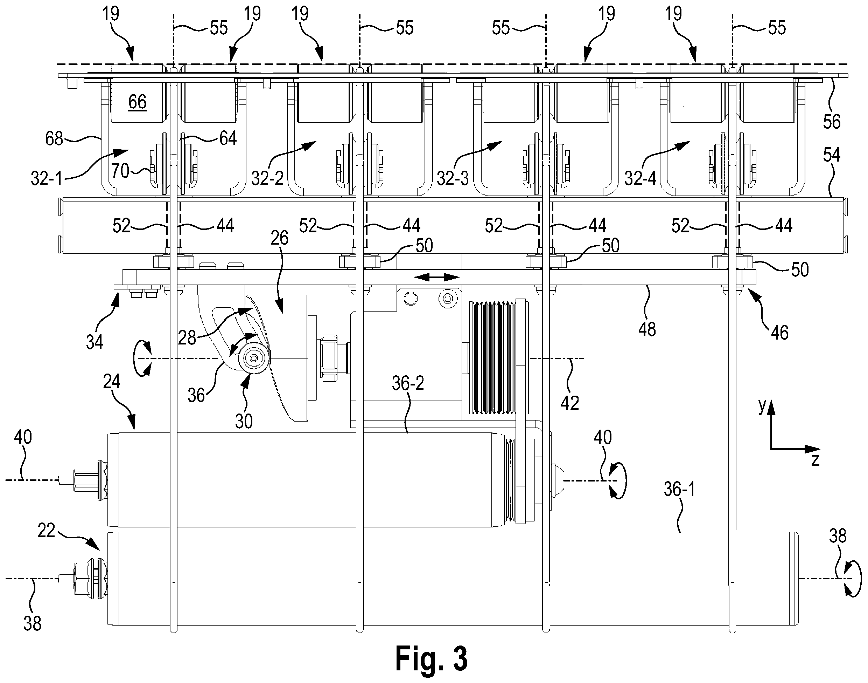

Der Umlenkförderer 18 ist eingerichtet, die Förderrichtung 20 in Abhängigkeit von dem entsprechenden Förderziel, d.h. einem der Abführförderer 14-1 bis 14-3, zu ändern. Der Umlenkförderer 18 definiert (auf seiner oberen Seite) eine drehbar gelagerte, angetriebene Umlenkförderer-Fläche 19. Der Umlenkförderer 18 kann ein oder mehrere (nicht gezeigte) Rolleneinheiten 32 (Vgl. Fig. 2 und 3) umfassen, die eingerichtet sind, die Fläche 19 des Umlenkförderers 18 zu definieren. Die Fläche 19 kann im Wesentlichen koplanar mit einer angrenzenden restlichen (Transport-) Fläche der Umlenkvorrichtung 16 ausgebildet sein. Im Beispiel der Fig. 1 ist die entsprechende Drehachse 55 (vgl. Fig. 3) des Umlenkförderers 18 z.B. vertikal, d.h. parallel zur Höhenrichtung Y, orientiert. Das Förderziel, d.h. einer der Abführförderer 14-1 bis 14-3, wird durch eine hier nicht näher gezeigte und bezeichnete Steuerung (z.B. durch einen Materialflussrechner) vorgegeben, die mit der Umlenkvorrichtung 16 (und mit dem Umlenkförderer 18) zum Austausch von entsprechenden (Steuer-) Daten verbunden ist. Es versteht sich, dass die Förderer 12 und 14 sowie die Umlenkvorrichtung 16 mit einer entsprechenden Sensorik (z.B. Kameras, Lichttaster, Lichtschranken, Gewichtssensoren, etc.; nicht gezeigt) versehen sein können, um eine aktuelle Position des Förderguts zwecks Beeinflussung einer zukünftigen Förderrichtung 20 zu erfassen.

Die Abführförderer 14 können an unterschiedlichen (Ziel-) Orten (unmittelbar) an die Umlenkvorrichtung 16 angrenzen. Die Umlenkvorrichtung 16 ist eingerichtet, das Fördergut an den jeweils gewünschten Ort umzulenken. Umlenken bedeutet also allgemein eine Änderung der aktuellen Förderrichtung 20 in eine ggf. andere zukünftige Förderrichtung 20.

Fig. 2 zeigt eine perspektivische Sicht von unten auf einen schematisch dargestellten Umlenkförderer 18. Fig. 3 zeigt eine Seitenansicht des Umlenkförderers 18 der Fig. 2, wenn man ihn entlang der Hauptförderrichtung 20-1 betrachtet. Ein Aufbau des Umlenkförderers 18 wird unter gleichzeitiger Bezugnahme auf die Fig. 2 und 3 beschrieben werden.

Im Allgemeinen weist jeder Umlenkförderer 18 die Umlenkförderer-Fläche 19, eine erste (angetriebene) Welle 22, eine zweite (angetriebene) Welle 24, eine (Spur-) Scheibe 26 mit einer Spur 28 und mindestens einen Wälzkörper 30 auf. Des Weiteren kann jeder Umlenkförderer 18 mindestens eine (schwenkbar gelagerte) Rolleneinheit 32 und einen Schwenkmechanismus 34 aufweisen. Der Schwenkmechanismus 34 kann über Wälzkörper-Träger 36 mit dem oder den Wälzkörpern 30 verbunden sein. In den Fig. 2 und 3 sind (genau) zwei Wälzkörper 30-1 und 30-2 gezeigt, die - in Bezug auf die Scheibe 26 - um 180° versetzt mit der Spur 28 in Kontakt sind. Ein Gestell der Umlenkvorrichtung 16, an oder in dem der Umlenkförderer 18 montiert ist, ist in den Fig. 2 und 3 zur Vereinfachung der Veranschaulichung nicht gezeigt.

Die Wälzkörper 30 sind Kugeln, Rollen, Tonnen, Nadeln, Kegel oder andere drehbar gelagerte Rotationskörper, die z.B. aus Stahl, Keramik oder aus speziellen, extra harten Kunststoffen hergestellt sein können und die als Elemente eines Wälzlagers oder einer Linearwälzführung die Reibung zwischen den verschiedenen Komponenten des (Wälz-) Lagers oder der (Linear-) Führung erheblich reduzieren und damit eine relative Bewegung der verschiedenen Komponenten zueinander extrem erleichtern. Die Wälzkörper 30 sind in der Querrichtung Z verschieblich gelagert.

Die erste Welle 22 kann durch eine sogenannte Motorrolle 36 implementiert sein und erstreckt sich entlang einer ersten (Dreh-) Achse 38. Unter einer Motorrolle 36 ist eine Fördererrolle eines Rollenförderers zu verstehen, die in ihrem Inneren einen (Antriebs-) Motor (nicht gezeigt) integriert hat. Die zweite Welle 24 kann ebenfalls durch eine Motorrolle 36 implementiert sein und erstreckt sich entlang einer zweiten (Dreh-) Achse 40. Die Scheibe 26 kann sich entlang einer 3. (Dreh-) Achse 42 erstrecken. Es versteht sich, dass die Scheibe 26 auch direkt, d.h. ohne eine Umlenkung, mit der zweiten Welle 24 verbunden sein könnte, sodass die Scheibe 26 um die zweite Welle 24 dreht. Die Wellen 22 und 24 bzw. die Motorrollen 36 sind entweder direkt im Gestell der Umlenkvorrichtung 16 oder in einem Gestell (nicht veranschaulicht) des Umlenkförderers 18, das (austauschbar) im Gestell der Umlenkvorrichtung 16 montierbar sein kann, gelagert.

Die Achsen 38, 40 und 42 sind achsparallel zueinander und insbesondere parallel zur Querrichtung Z der Umlenkungsvorrichtung 16 (vgl. Fig. 1) ausgerichtet. Die Achsen 38-42 können in der Höhenrichtung Y (deckungsgleich) übereinander angeordnet sein. Die Achsen 38-42 können ferner parallel zu einer Reihe aus den Rolleneinheiten 32 ausgerichtet sein. Diese parallele Ausrichtung der Achsen 38-42 und der Rolleneinheiten 32 lässt den Umlenkförderer 18 in der Hauptförderrichtung 20-1 (Längsrichtung X) extrem kurz bauen, wie es unten noch näher erläutert werden wird. Die Motorrollen 36 liegen im vertikalen Schattenraum VS (vgl. Fig. 8A) der Rolleneinheiten 32. Der vertikale Schattenraum VS ist der Raum vertikal unterhalb der Rolleneinheiten 32, der durch äußerste Ränder der Rolleneinheiten 32 in der Längsrichtung X begrenzt ist, wenn man die Rolleneinheiten 32 senkrecht von oben - also parallel zur Höhenrichtung Y - betrachtet.

In den Fig. 2 und 3 umfasst der Umlenkförderer 18 exemplarisch vier Rolleneinheiten 32-1 bis 32-4, die entlang der Querrichtung Z ausgerichtet und aufgereiht sind. Es versteht sich, dass der Umlenkförderer 18 mehr oder weniger Rolleneinheiten 32 aufweisen kann. Die Rolleneinheiten 32 können über jeweils einen umlaufend angeordneten (Antriebs-) Riemen 44 mit der, vorzugsweise einzigen, ersten Motorrolle 36-1 verbunden sein.

Der beweglich gelagerte Schwenkmechanismus 34 kann einen Parallelogramm-artigen Rahmen 46 umfassen. Der Rahmen 46 kann aus Längsgliedern 48 und Quergliedern 50 gebildet werden, wobei sich die Längsglieder 48 - im verbauten Zustand des Umlenkförderers 18 - parallel zur Querrichtung Z erstrecken und wobei sich die Querglieder 50 (in einer Normalstellung des Umlenkförderers 18, wie in den Fig. 2 und 3 gezeigt) parallel zur Längsrichtung X erstrecken. Exemplarisch sind genauso viele Querträger 50 wie Rolleneinheiten 32 vorgesehen. Vorzugswiese werden mindestens zwei Querträger 50 vorgesehen.

In einer Umlenkstellung (nicht dargestellt in Fig. 2 und 3; vgl. Fig. 8B+C) schließen die Querglieder 50 einen Winkel ungleich Null mit der Längsrichtung X ein, wie es nachfolgend noch näher erläutert werden wird. In der Umlenkstellung definieren die Glieder 48 und 50 (in einer Draufsicht) ein Parallelogramm. In der Normalstellung definieren die Glieder 48 und 50 vorzugsweise ein Rechteck. Die Glieder 48 und 50 können in der XZ-Ebene angeordnet sein. Der Schwenkmechanismus 34 kann ferner (vgl. Strichlinien in Fig. 3) Schwenkachsen 52 umfassen. Üblicherweise ist für jede Rolleneinheit 32 eine (eigene) Schwenkachse 52 vorgesehen, die sich (vertikal) durch einen (maschinenfesten, d.h. unbeweglichen) Querträger 54 erstrecken kann, der parallel zur Querrichtung Z orientiert sein kann. Die Schwenkachsen 52 stellen vierte (Dreh-) Achsen 55 (vgl. Fig. 3) dar, die parallel zur Höhenrichtung Y orientiert sein können. Der Querträger 54 kann ein Element eines Maschinengestells 56 des Umlenkförderers 18 sein, von dem in Fig. 3 exemplarisch nur eine obere Abdeckung gezeigt ist.

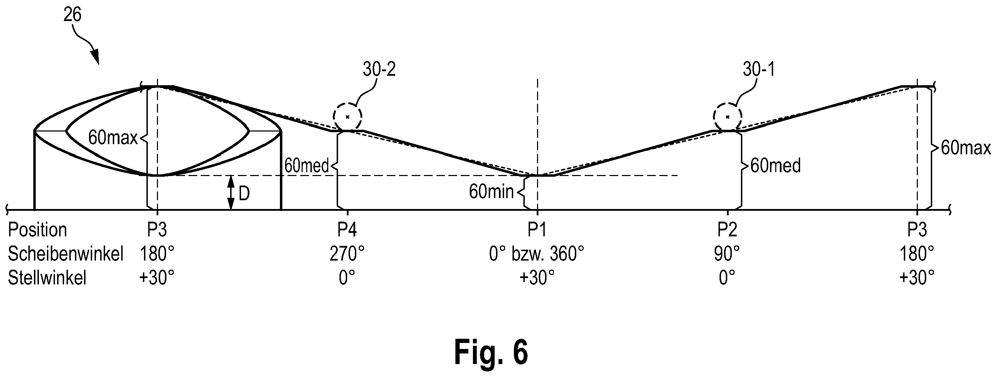

Der in den Fig. 2 und 3 veranschaulichte Umlenkförderer 18 umfasst exemplarisch die zwei Wälzkörper 30-1 und 30-2, die die Spur 28 der Scheibe 26 axial, d.h. in einer Richtung parallel zu den Wellen 38-42, berühren. Die Spur 28 ist in einer der Stirnseiten 58 der (im Wesentlichen zylindrischen bzw. abgerundeten) Scheibe 26 ausgebildet. Die Spur 28 weist in der axialen Richtung unterschiedliche Spurhöhen 60 auf, wie es nachfolgend unter Bezug auf Fig. 6 noch näher erläutert werden wird. Die unterschiedlichen Spurhöhen 60 bewirken, dass die Wälzkörper 30 entlang der Richtung der Achsen 38-42 unterschiedlich stark ausgelenkt werden. Durch die Auslenkung der Wälzkörper 30 in der Richtung Z werden die Längsträger 48-1 und 48-2 des Schwenkmechanismus 34 in der Querrichtung Z entsprechend (gegenläufig) ausgelenkt. Die Auslenkung der Längsträger 48-1 und 48-2 resultiert in einer Drehung der Querträger 50 um die vertikale vierte Drehachse 55, die in der Mitte der Querträger 50 positioniert sein kann und die wiederum mit den entsprechenden Rolleneinheiten 32 verbunden ist. Auf diese Weise werden die Rolleneinheiten 32 um die vertikale Achse 55 gedreht und in eine gewünschte Förderrichtung 20, wie zum Beispiel in die Förderrichtungen 20-2 oder 20-3 der Fig. 1, gedreht bzw. verschwenkt.

Fig. 4-6 veranschaulichen Details der Scheibe 26 der Fig. 2 und 3. Fig. 4 zeigt eine perspektivische Ansicht der Scheibe 26. Fig. 5 zeigt eine Draufsicht auf die Stirnseite 58 der Scheibe 26. Fig. 6 veranschaulicht eine (Höhen-) Abwicklung der Spur 28 der Scheibe 26.

In Fig. 4 ist die Scheibe 26 perspektivisch veranschaulicht. Die Scheibe 26 kann aus einem im Wesentlichen zylindrischen Grundkörper 62 und der (umfänglichen) Spur 28 gebildet werden, die in einem äußeren Randbereich der Stirnseite 58 (des Grundkörpers 62) aus der Stirnseite 58 zumindest teilweise vorsteht.

Unter dem Begriff "Scheibe" ist allgemein ein geometrischer Körper in Form eines Zylinders zu verstehen, dessen Radius um ein Vielfaches größer als seine (axiale) Dicke D ist. Die sich axial gegenüberliegenden Stirnseiten 58 und 59 der Scheibe 26 sind im Wesentlichen kreisförmig, weisen also einen im Wesentlichen konstanten Radius auf. Der Grundkörper 62 weist die konstante Dicke D auf. Wäre die Dicke D gleich Null, würde man ein zweidimensionales Element erhalten, das einer Kreisscheibe bzw. einer Kreisfläche entspricht.

Die Spur 28 steht aus dem Grundkörper 62 axial vor und kann z.B. vier (Stell-) Positionen P1 bis P4 aufweisen. Die Positionen P1 bis P4 sind in der Fig. 4 jeweils um 90° voneinander beanstandet. Eine Anzahl und Relativlage der Positionen P hängt von der Anzahl von verschiedenen Förderrichtungen 20 ab, zwischen denen ausgewählt werden soll.

Die Spur 28 weist vorzugsweise eine im Wesentlichen konstante Spurbreite BS auf. Die Spur 28 verläuft vorzugsweise entlang einem äußeren Randbereich der Stirnseite 58. In Bezug auf die Stirnseite 58 weist die Spur 28 unterschiedliche Spurhöhen 60 auf, die während einer (vollständigen) Umdrehung der Scheibe 26 um ihre (nicht näher bezeichnete und gezeigte) Längsachse (senkrecht zur Zeichnungsebene der Fig. 5) zunehmen und abnehmen, wie es unter Bezugnahme auf Fig. 6 noch näher erläutert werden wird. Im Punkt P1 kann die Spurhöhe 60 minimal sein, siehe 60min. In den Punkten P2 und P4 kann die Spurhöhe 60 einen Mittelwert (Median) einnehmen, siehe 60med. Im Punkt P3 kann die Spurhöhe 60 maximal sein, siehe 60max.

In Fig. 5 ist veranschaulicht, dass die Stirnseite 58 bzw. eine Einhüllende des Querschnitts der Spur 28 nicht ideal kreisförmig sein muss. Der Durchmesser d2 zwischen den Punkten P2 und P4 kann geringfügig grösser als der Durchmesser d1 zwischen den Punkten P1 und P3 sein. Auf diese Weise wird sichergestellt, dass die Wälzkörper 30-1 und 30-2 zuverlässig und sicher mit der Spur 28 in Kontakt sind und diese vollständig überlappen, siehe auch Fig. 8.

Fig. 6 zeigt die Höhenabwicklung der Spur 28. Im linken Bereich der Fig. 6 ist die Scheibe 26 in einer Seitenansicht angedeutet. Die Spur 28 ist im Graphen der Fig. 6 nach rechts abgewickelt. Die Abszisse veranschaulicht die Positionen P1 bis P4 bzw. einen Drehwinkel ("Scheibenwinkel": 0° bis 360°) der Scheibe 26 bzw. einen "Stellwinkel" der Rolleneinheit(en) 32. Die Ordinate veranschaulicht die Spurhöhe 60.

Die Fig. 7A-C veranschaulicht verschiedene Ausrichtungen einer der Rolleneinheiten 32 der Fig. 2 und 3 bei entsprechenden Drehungen der Scheibe 26 um 0°, 45° und 90°, wie in den Figuren 8A-C veranschaulicht. In der Normalstellung, in welcher die Rolleneinheit 32 z.B. einen Winkel von 0° mit der Hauptförderrichtung 20-1 einschließt, berührt der Wälzkörper 30-1 die Position P2 der Spur 28 und der Wälzkörper 30-2 berührt die Position P4 der Spur 28, während der Drehwinkel der Scheibe 26 Null Grad beträgt. Danach wird die Scheibe 26 um 45° gedreht, wie es in der Fig. 8B veranschaulicht ist. Diese Drehung der Scheibe 26 bewirkt, über den Schwenkmechanismus 34 eine Drehung der Rolleneinheiten 32 um z.B. -15°, siehe Fig. 7B. Wenn die Scheibe 26 um weitere 45 °, also insgesamt um 90 ° in Bezug auf die Stellung der Fig. 8A gedreht wird, wie es in Fig. 8C gezeigt ist, wird die Rolleneinheit 32 um weitere -15° in den Stellwinkel -30° verschwenkt, wie es in Fig. 7C gezeigt ist. Zu diesem Zeitpunkt berührt der Wälzkörper 30-1 den Punkt P3 der Spur 26 und der Wälzkörper 30-2 berührt den Punkt P1 der Spur 26.

Bei einer weiteren (nicht veranschaulichten) Drehung der Scheibe 26 um 90° (Gesamtdrehwinkel: 180°) - ohne Richtungswechsel - bewegt sich die Rolleneinheit 32 in die Normalstellung 0° zurück und bei einer weiteren Drehung um 90° (Gesamtdrehwinkel: 270°) bewegt sich die Rolleneinheit 32 in den Stellwinkel +30° (nicht veranschaulicht in Fig. 7). Bei einer weiteren Drehung der Scheibe 26 um 90° (Gesamtdrehwinkel: 360°) steht die Rolleneinheit 32 wieder in der Normalstellung 0°. Bei einer noch weiteren Drehung der Scheibe 26 wiederholt sich der soeben beschriebene Vorgang. Auf diese Weise kann die Rolleneinheit 32 oszillierend zwischen den Stellwinkeln -30°, 0° und +30° hin und her bewegt werden, vorausgesetzt die Scheibe 26 wird kontinuierlich (und ohne Richtungsumkehr) gedreht.

Es versteht sich, dass die Scheibe 26 nicht kontinuierlich gedreht werden muss. Die Scheibe 26 kann auch diskret bewegt werden, sodass die Scheibe 26 phasenweise in Ruhe ist, d.h. nicht gedreht wird. In diesem Fall verharrt die Rolleneinheit 32 in dem aktuell eingestellten Stellwinkel. Um Toleranzen beim Einstellen des Stellwinkel mittels Drehung der Scheibe 26 besser ausgleichen zu können, empfiehlt es sich, die Spur 26 im Bereich der (Stell-) Positionen P1 bis P4 mit einem Plateau zu versehen, wie es in Fig. 6 angedeutet ist. Ein Plateau kann sich dadurch auszeichnen, dass die Spurhöhe 60 über eine größere Länge der Spur 28 (entlang der Umfangsrichtung der Scheibe 26) nahezu konstant ist.

Außerdem empfiehlt es sich die Steigung der Spurabschnitte zwischen den Stellpunkten P1 bis P4 nicht zu steil zu wählen, um die auf die Wälzkörper 30 ausgeübten Kräften nicht zu groß werden zu lassen. Dies kann erreicht werden, indem der Durchmesser d der Scheibe 26 - und damit der Spur 28 - entsprechend groß gewählt wird oder indem die Höhendifferenz der Spur 28 nicht zu groß gewählt werden.

Ferner versteht es sich, dass die Scheibe 26 mittels einer (hier nicht näher erläuterten) Steuerung auch hin und her bewegt werden kann. Dies bedeutet, dass die Scheibe 26 in unterschiedlichen Drehrichtungen gedreht werden kann, um gewünschte Stellpositionen P zu erreichen (und dort auch zu verharren).

Eine relative Höhe der Spurhöhe 60 beeinflusst einen Betrag des Stellwinkels. Im Beispiel der Figuren 6-8 entspricht eine Differenz zwischen der maximalen Spurhöhe 60max und der minimalen Spurhöhe 60min einer Stellwinkeldifferenz von 60°. Dies bedeutet mit anderen Worten, dass im Beispiel der Fig. 4-6 eine Differenz zwischen der maximalen Spurhöhe 60max, bzw. der minimalen Spurhöhe 60min, und der mittleren Spurhöhe 60med einem Stellwinkelbetrag von 30° entspricht.

Schließlich versteht es sich, dass die Anzahl der Stellpunkte P entlang der Spur 28 einer Anzahl von unterschiedlichen Förderrichtungen 20 entspricht, zwischen denen ausgewählt werden kann. Ein Stellpunkt P zeichnet sich insbesondere durch eine Steigung von 0° im Graphen der Höhenabwicklung der Fig. 6 aus.

In den Fig. 7A und 8A ist der oben erwähnte "vertikale Schattenraum" VS in Form von gestrichelten Hilfslinien visualisiert, die eine äußere Begrenzung des Umlenkförderers 18 darstellen, wenn sich der Umlenkförderer 18 - über seine Rolleneinheiten 32 - in seiner Normalstellung (Stellwinkel: 0°), d.h. parallel zur Längsrichtung X ausgerichtet, befindet. Die Breite des Umlenkförderers 18 in der Längsrichtung X wird im Beispiel der Figuren 2-8 durch einen (horizontalen) Abstand A von (äußeren, optional vorgesehenen) Zusatzrollen 64 bestimmt, die in X weiter außen liegen können als die Transportrollen 66 der jeweiligen Rolleneinheit 32. Die Oberseiten der Transportrollen 66 können die oben bereits erwähnte Umlenkförderer-Fläche 19 definieren. Die Rollen 64 und 66 können eingerichtet sein, den Antriebsriemen 44 in umfänglich vorgesehenen Nuten (form- und kraftschlüssig) aufzunehmen.

Die in den Fig. 2, 3, 7 und 8 gezeigten Rolleneinheiten 32 können alle gleich aufgebaut sein. Jede dieser Rolleneinheiten 32 kann zwei (oder mehr) der Transportrollen 66 aufweisen, die in X hintereinander und in Y ganz oben angeordnet sein können. Eine Drehachse der Transportrollen 66 kann in der Normalstellung parallel zur Querrichtung Z - und damit parallel zu den Achsen 38-42 - orientiert sein. Die Drehachsen der Transportrollen 66 können in einem gabelförmigen Träger 68 drehbar gelagert sein. Der gabelförmige Träger 68 kann einen nach oben offenen U- bzw. C-förmigen Querschnitt aufweisen, vgl. YZ-Ebene in Fig. 3. Der gabelförmige Träger 68 kann drehfest mit der Schwenkachse 52 verbunden sein. Die Zusatzrollen 64 können in Y unterhalb der Transportrollen 66 angeordnet sein. Die Zusatzrollen 64 weisen ebenfalls Drehachsen auf, die achsparallel zu den Drehachsen der Transportrollen 66 angeordnet sein können und die z.B. über in X auskragende Arme 70 mit dem gabelförmigen Träger 68 verbunden sein können. Auf die Arme 70 kann verzichtet werden, wenn der Träger 68 entsprechend ausgebildet ist.

Die außen liegende Anordnung der Zusatzrollen 64 bewirkt, dass der Antriebsriemen 44, der durch die erste Motorrolle 36-1 angetrieben wird, nicht in Kontakt mit der darüber angeordneten zweiten Motorrolle 36-2 kommt, die als Stellantrieb für die Scheibe 26 wirkt. Aus der Zusammenschau der Fig. 7A und 8A ist deutlich zu erkennen, dass i) der Schwenkmechanismus 34 mit den daran (fest) angebrachten Wälzkörpern 30, ii) die Scheibe 26 und iii) die Motorrollen 36 innerhalb des vertikalen Schattenraums VS liegen, dessen "Breite" in der X-Richtung durch den Abstand A der Zusatzrollen 64 bestimmt ist.

Der Abstand A und eine Breite des Schwenkmechanismus 34 in der X-Richtung können auf einen Durchmesser der Motorrollen 36 abgestimmt sein, so dass der Umlenkförderer 18 in der X-Richtung so kurz wie möglich baut. Es werden keine weiteren Umlenkrollen benötigt, wie sie z.B. bei der Umlenkvorrichtung gemäß der US 4,598,815 B1 eingesetzt werden, um den Antriebsriemen 44 mit einem ausreichenden Abstand in der X-Richtung zum Antrieb zu positionieren. Der Abstand A ist vorzugsweise nur geringfügig größer als ein Abstand B der Transportrollen 66, vgl. Fig. 8A. Die Transportrollen 66 und die zusätzlichen Umlenkrollen 64 überlappen einander in der X-Richtung.

Dies bedeutet mit anderen Worten, dass der Umlenkförderer 18 in der Längsrichtung X extrem kurz baut. Der Umlenkförderer 18 kann kassettenartig ausgebildet sein, was eine Installation, eine Wartung und einen Austausch sehr erleichtert. Der Umlenkförderer 18 weist keine weiteren zusätzlichen Umlenkrollen auf, die in der X-Richtung weit seitlich zum Antrieb (Motorrolle 36-1) angeordnet sind.

Wenn die Scheibe 26 direkt auf der zweiten Welle 40 montiert wird, sodass auf die dritte Welle 42 verzichtet wird, baut der Umlenkförderer 18 auch in der Höhenrichtung Y sehr kurz. Der für den Umlenkförderer 18 benötigte Bauraum wird dadurch nochmals komprimiert.

### BEZUGSZEICHENLISTE

- 10: Fördersystem
- 12: Zuführförderer
- 14: Abführförderer
- 16: Umlenkvorrichtung
- 17: Rolle
- 18: Umlenkförderer
- 19: (Umlenkförderer-) Fläche
- 20: Förderrichtung
- 22: 1. Welle
- 24: 2. Welle
- 26: (Kontur-) Scheibe
- 28: Spur von 26
- 30: Wälzkörper
- 32: Rolleneinheit
- 34: Schwenkmechanismus
- 36: Motorrolle
- 38: 1. (Dreh-) Achse
- 40: 2. (Dreh-) Achse
- 42: 3. (Dreh-) Achse
- 44: (Antriebs-) Riemen
- 46: (Parallelogramm-) Rahmen
- 48: Längsglied von 34
- 50: Querglied von 34
- 52: Schwenkachse
- 54: Querträger
- 55: 4. (Dreh-) Achse
- 56: Maschinengestell
- 58: Stirnseite von 26
- 59: Stirnseite, gegenüberliegend
- 60: Spurhöhe
- 62: Grundkörper von 26
- D: Dicke von 26, konstant
- BS: Spurbreite
- 64: Zusatzrolle
- 66: Transportrolle
- VS: vertikaler Schattenraum
- A: Abstand von 64
- B: Abstand von 66
- 68: Träger
- 70: Arm

## Patentansprüche

1. Umlenkförderer (18), der aufweist:
eine Umlenkförderer-Fläche (19), die eingerichtet ist, ein darauf angeordnetes Fördergut an eine Vielzahl von, an jeweils unterschiedlichen Orten vorgesehenen, Abführförderern (14) zu fördern, indem die Fläche (19) angetrieben wird und indem die Fläche (19) in entsprechend unterschiedliche Förderrichtungen (20) ausgerichtet wird, wobei jede der Förderrichtungen (20) durch einen der Orte festgelegt ist;
eine erste angetriebene Welle (22) zum Antreiben der Fläche (19);
eine zweite angetriebene Welle (24) zum Ausrichten der Fläche (19), wobei die zweite Welle (24) achsparallel zur ersten Welle (22) angeordnet ist; **dadurch gekennzeichnet, dass** der Umlenkförderer eine Scheibe (26) aufweist,
die achsparallel zur ersten und zweiten Welle (22; 24) angeordnet ist und die eine axial endseitig angeordnete Stirnseite aufweist, wobei die Stirnseite eine Spur (28) mit einer axial gerichteten Spurhöhe umfasst, die sich entlang einer Umfangsrichtung der Scheibe (26) in Übereinstimmung mit den unterschiedlichen Förderrichtungen (20) ändert; und
mindestens einen Wälzkörper (30), der die Spur (28) axial berührt, der axial beweglich gelagert ist und der fest an die Fläche (19) gekoppelt ist, so dass sich der mindestens eine Wälzkörper (30) axial hin und her bewegt, während die Scheibe (26) durch die zweite Welle (24) gedreht wird, um die Fläche (19) in die unterschiedlichen Förderrichtungen (20) auszurichten.

2. Umlenkförderer (18) nach Anspruch 1, wobei die Spur (28) einen im Wesentlichen kreisförmigen Querschnitt senkrecht zur Achse der Scheibe (26) aufweist, und wobei die Spur (28) vorzugsweise umfänglich in sich geschlossen ist.

3. Umlenkförderer (18) nach Anspruch 2, wobei die Spur (28) einen ersten Durchmesser d1 hat, der kleiner als ein zweiter Durchmesser D2 ist, so dass der mindestens eine Wälzkörper (30) eine Oberfläche der Spur (28) in jeder Drehstellung der Scheibe (26) auf einer ganzen Wälzkörperbreite kontaktiert.

4. Umlenkförderer (18) nach einem der Ansprüche 1 bis 3, wobei die ersten und zweiten Wellen (22, 24) vertikal übereinander angeordnet sind, und wobei die zweite Welle (24) vorzugsweise zwischen der ersten Welle (22) und der Fläche (19) angeordnet ist.

5. Umlenkförderer (18) nach einem der Ansprüche 1 bis 4, wobei die Fläche (19) durch eine Vielzahl von Rolleneinheiten (32) definiert ist, die um eine vertikale Achse (55) schwenkbar gelagert sind und die linear quer, insbesondere senkrecht, zu einer Zuführförderrichtung (20-1) angeordnet sind.

6. Umlenkförderer (18) nach Anspruch 5, wobei die ersten und zweiten Wellen (22, 24) innerhalb eines vertikalen Schattenraums (VS) angeordnet sind, dessen Breite durch eine Breite (A) der Rolleneinheiten (32) parallel zur Zuführförderrichtung (20-1) in der Normalstellung des Umlenkförderers (18) definiert ist.

7. Umlenkförderer (18) nach einem der Ansprüche 1 bis 6, wobei der mindestens eine Wälzkörper (30), vorzugsweise ausschließlich, einen ersten Wälzkörper (30-1) und einen zweiten Wälzkörper (30-2) umfasst, die die Spur (28), insbesondere um 180° versetzt, berühren.

8. Umlenkförderer (18) nach einem der Ansprüche 1 bis 7, wobei eine Höhenabwicklung der Spur (28) spiegelsymmetrisch ist.

9. Umlenkförderer (18) nach einem der Ansprüche 1 bis 8, wobei die ersten und zweiten Wellen (22, 24) jeweils durch eine Motorrolle (36) implementiert sind.

10. Umlenkförderer (18) nach einem der Ansprüche 1 bis 9, wobei die ersten und zweiten Wellen (22, 24) vertikal unterhalb der Fläche (19) positioniert sind und senkrecht zu einer Hauptförderrichtung (20-1) orientiert sind.

11. Umlenkförderer (18) nach Anspruch 10, wobei die Fläche (19) durch eine Rolleneinheit (32) definiert ist, die eingerichtet ist, in einer Normalstellung des Umlenkförderers (18) in der Hauptförderrichtung (20-1) zu fördern, und wobei die ersten und zweiten Wellen (22, 24) in der Hauptförderrichtung (20-1) nicht über einen vertikalen Schattenraum (VS) hinausragen, der durch ein Außenmaß der Rolleneinheit (32) in der Hauptförderrichtung (20-1) definiert ist.

12. Umlenkvorrichtung (16) mit einem Umlenkförderer (18) nach einem der Ansprüche 1 bis 11.

13. Fördersystem (10) mit einem Zuführförderer (12), mindestens zwei Abführförderern (14) und einer Umlenkvorrichtung (16) nach Anspruch 12 dazwischen, wobei jeder der Abführförderer (14) an einem anderen Ort an die Umlenkvorrichtung (16) angrenzt.

## Claims

1. A diverting conveyor (18) comprising:
a diverting-conveyor surface (19) configured to convey a conveying item arranged thereon to a plurality of outfeed conveyors (14) provided at respectively different locations by the surface (19) being driven and by the surface (19) being oriented in correspondingly different conveying directions (20), wherein each of the conveying directions (20) is set by one of the locations;
a first driven shaft (22) for driving the surface (19);
a second driven shaft (24) for orienting the surface (19), wherein the second shaft (24) is arranged axially parallel to the first shaft (22);
**characterized in that** the diverting conveyor (18) comprises a disc (26) arranged axially parallel to the first and second shafts (22; 24) and having an axially arranged end-sided end face, wherein the end face includes a track (28) having an axially directed track height, which changes along a circumferential direction of the disc (26) in accordance with the different conveying directions (20); and
at least one rolling body (30), which axially contacts the track (28), is axially-movably supported, and is fixedly coupled to the surface (19) such that the at least one rolling body (30) moves axially back and forth while the disc (26) is rotated by the second shaft (24) in order to orient the surface (19) into the different conveying directions (20).

2. The diverting conveyor (18) of claim 1, wherein the track (28) has a substantially circular cross-section perpendicular to the axis of the disc (26), and wherein the track (28) preferably is formed as a circumferentially closed track.

3. The diverting conveyor (18) of claim 2, wherein the track (28) has a first diameter d1 smaller than a second diameter d2 such that the at least one rolling body (30) contacts a surface of the track (28) over an entire width of the rolling body in every rotational position of the disc (26).

4. The diverting conveyor (18) of any one of claims 1 to 3, wherein the first and second shafts (22, 24) are arranged vertically one above the other, and wherein the second shaft (24) preferably is arranged between the first shaft (22) and the surface (19).

5. The diverting conveyor (18) of any one of claims 1 to 4, wherein the surface (19) is defined by a plurality of roller units (32) pivotably mounted about a vertical axis (55) and arranged linearly transversely, in particular perpendicular, to an infeed-conveying direction (20-1).

6. The diverting conveyor (18) of claim 5, wherein the first and second shafts (22, 24) are arranged within a vertical shadow space (VS), the width of which is defined by a width (A) of the roller units (32) parallel to the infeed-conveying direction (20-1) in the normal position of the diverting conveyor (18).

7. The diverting conveyor (18) of any one of claims 1 to 6, wherein the at least one rolling body (30) comprises, preferably exclusively, a first rolling body (30-1) and a second rolling body (30-2), which contact the track (28), in particular offset by 180°.

8. The diverting conveyor (18) of any one of claims 1 to 7, wherein a height profile of the track (28) is mirror symmetrical.

9. The diverting conveyor (18) of any one of claims 1 to 8, wherein the first and second shafts (22, 24) are respectively implemented by a motorized roller (36).

10. The diverting conveyor (18) of any one of claims 1 to 9, wherein the first and second shafts (22, 24) are positioned vertically below the surface (19) and are oriented perpendicular to a main conveying direction (20-1).

11. The diverting conveyor (18) of claim 10, wherein the surface (19) is defined by a roller unit (32) configured to convey, in a normal position of the diverting conveyor (18), in the main conveying direction (20-1), and wherein the first and second shafts (22, 24) do not protrude beyond a vertical shadow space (VS) in the main conveying direction (20-1) defined by an outer dimension of the roller unit (32) in the main conveying direction (20-1).

12. A diverting device (16) including a diverting conveyor (18) of any one of claims 1 to 11.

13. A conveying system (10) including an infeed conveyor (12), at least two outfeed conveyors (14), and a diverting device (16) of claim 12 in between, wherein each of the outfeed conveyors (14) adjoins the diverting device (16) at a different location.

## Revendications

1. Transporteur de déviation (18), présentant :
une surface de transporteur de déviation (19) qui est configurée pour transporter un produit à transporter disposé sur celle-ci vers une pluralité de transporteurs d'évacuation (14) prévus au niveau d'emplacements respectivement différents, dans lequel la surface (19) est entraînée et dans lequel la surface (19) est orientée dans différentes directions de transport (20) correspondantes, dans lequel chacune des directions de transport (20) est définie par l'un des emplacements ;
un premier arbre (22) entraîné pour l'entraînement de la surface (19) ;
un second arbre (24) entraîné pour l'orientation de la surface (19), dans lequel
le second arbre (24) est disposé parallèlement à l'axe du premier arbre (22) ; **caractérisé en ce que** le transporteur de déviation présente un disque (26) qui est disposé parallèlement aux axes du premier et du second arbre (22 ; 24) et présente un côté frontal disposé axialement côté extrémité, dans lequel le côté frontal comprend une piste (28) comportant une hauteur de piste orientée axialement et qui varie le long d'une direction circonférentielle du disque (26) en conformité avec les différentes directions de transport (20) ; et
au moins un corps de roulement (30) qui est axialement en contact avec la piste (28), qui est monté de manière à pouvoir se déplacer axialement et qui est accouplé de manière fixe à la surface (19) de sorte que l'au moins un corps de roulement (30) se déplace axialement en va-et-vient pendant que le disque (26) est tourné par le second arbre (24) afin d'orienter la surface (19) dans les différentes directions de transport (20).

2. Transporteur de déviation (18) selon la revendication 1, dans lequel la piste (28) présente, perpendiculairement à l'axe du disque (26), une section transversale sensiblement circulaire, et dans lequel la piste (28) est de préférence fermée de manière circonférentielle sur elle-même.

3. Transporteur de déviation (18) selon la revendication 2, dans lequel la piste (28) possède un premier diamètre d1 inférieur à un second diamètre D2 de sorte que l'au moins un corps de roulement (30) entre en contact avec une surface de la piste (28) sur toute une largeur de corps de roulement dans chaque position de rotation du disque (26).

4. Transporteur de déviation (18) selon l'une des revendications 1 à 3, dans lequel le premier et le second arbre (22, 24) sont disposés verticalement l'un au-dessus de l'autre, et dans lequel le second arbre (24) est de préférence disposé entre le premier arbre (22) et la surface (19).

5. Transporteur de déviation (18) selon l'une des revendications 1 à 4, dans lequel la surface (19) est définie par une pluralité d'unités à rouleaux (32) qui sont montées pivotantes autour d'un axe vertical (55) et qui sont disposées linéairement transversalement, en particulier perpendiculairement, à une direction de transport d'alimentation (20-1).

6. Transporteur de déviation (18) selon la revendication 5, dans lequel le premier et le second arbre (22, 24) sont disposés à l'intérieur d'un espace d'ombre vertical (VS) dont la largeur est définie par une largeur (A) des unités à rouleaux (32) parallèles à la direction de transport d'alimentation (20-1) dans la position normale du transporteur de déviation (18).

7. Transporteur de déviation (18) selon l'une des revendications 1 à 6, dans lequel l'au moins un corps de roulement (30) comprend, de préférence exclusivement, un premier corps de roulement (30-1) et un second corps de roulement (30-2) qui sont en contact avec la piste (28), en particulier avec un décalage de 180°.

8. Transporteur de déviation (18) selon l'une des revendications 1 à 7, dans lequel un développement en hauteur de la piste (28) est en symétrie spéculaire.

9. Transporteur de déviation (18) selon l'une des revendications 1 à 8, dans lequel le premier et le second arbre (22, 24) sont respectivement implémentés par un rouleau motorisé (36).

10. Transporteur de déviation (18) selon l'une des revendications 1 à 9, dans lequel le premier et le second arbre (22, 24) sont positionnés verticalement en dessous de la surface (19) et sont orientés perpendiculairement à une direction de transport principale (20-1).

11. Transporteur de déviation (18) selon la revendication 10, dans lequel la surface (19) est définie par une unité à rouleaux (32) qui est conçue pour transporter, dans une position normale du transporteur de déviation (18), dans la direction de transport principale (20-1), et dans lequel le premier et le second arbre (22, 24) ne dépassent pas, dans la direction de transport principale (20-1), d'un espace d'ombre vertical (VS) défini par une mesure extérieure de l'unité à rouleaux (32) dans la direction de transport principale (20-1).

12. Dispositif de déviation (16) comportant un transporteur de déviation (18) selon l'une des revendications 1 à 11.

13. Système de transport (10) comportant un transporteur d'alimentation (12), au moins deux transporteurs d'évacuation (14) et un dispositif de déviation (16), selon la revendication 12, situé entre ceux-ci, dans lequel chacun des transporteurs d'évacuation (14) est adjacent au dispositif de déviation (16) au niveau d'un emplacement différent.
